# FASCICULE DE BREVET EUROPEEN

(11) **EP 2 069 547 B1**
(45) Date de publication et mention de la délivrance du brevet: **07.03.2012**
(21) Numéro de dépôt: 07823444.0
(22) Date de dépôt: 23.08.2007
(51) Int. Cl.: C22C 38/40, C21D 9/08

(54) **COMPOSITION D'ACIER POUR USAGES SPÉCIAUX, NOTAMMENT DANS LE DOMAINE DE L'AUTOMOBILE**
STAHLZUSAMMENSETZUNG FÜR SPEZIELLE ANWENDUNGEN, IM BESONDEREN IM KFZ-BEREICH
STEEL COMPOSITION FOR SPECIAL USES, IN PARTICULAR IN THE AUTOMOTIVE FIELD

(30) Priorité: 25.08.2006 FR 0607523
(43) Date de publication de la demande: 17.06.2009
(73) Titulaire: Valtimet, 21150 Venarey-les-Laumes (FR)
(72) Inventeur: GERARD, Pascal, 21500 Fain les Montbard (FR); VERLEENE, Arnaud, 59144 Gommegnies (FR)
(74) Mandataire: Bezault, Jean
(86) Numéro de dépôt international: PCT/FR2007/001396
(87) Numéro de publication internationale: WO 2008/023121

(56) Documents cités:
- FR-A1- 2 283 238
- GB-A- 2 051 125
- US-A- 4 224 062
- ANONYMOUS: "Stainless Steel Applications ? Automotive" INTERNATIONAL STAINLESS STEEL FORUM PUBLICATION, [Online] novembre 2005 (2005-11), XP002468791 Extrait de l'Internet: URL:http://www.worldstainless.org/NR/rdonl yres/1563541A-23AD-4869-A5BF-D4F1FC963257/ 2415/StainlessSteelApplicationsAutomotive. pdf> [extrait le 2008-01-29]
- SNELGROVE PAUL: "Stainless steel automotive and transport developments" INTERNATIONAL STAINLESS STEEL FORUM PUBLICATION, [Online] novembre 2005 (2005-11), XP002466732 Extrait de l'Internet: URL:http://www.worldstainless.org/NR/rdonl yres/97FD8804-655E-4BB6-9F21-CB025CC3D1B7/ 2416/Stainlesssteelautomotiveandtransportd evelopments.pdf> [extrait le 2008-01-29]
- ANONYMOUS: "Steel Grades, Properties and Global Standards" MATERIAL DATA SHEET OUTOKUMPU, [Online] novembre 2005 (2005-11), XP002466733 Extrait de l'Internet: URL:http://www.outokumpu.com/29152.epibrw> [extrait le 2008-01-29]
- DATABASE WPI Section Ch, Week 197814 Derwent Publications Ltd., London, GB; Class M,page 27, AN 1978-26180A XP002431347 -& JP 53 019127 A (NISSHIN STEEL CO LTD) 22 février 1978 (1978-02-22)
- ANDERSSON ET AL: "Low cycle fatigue of four stainless steels in 20% CO-80% H2" INTERNATIONAL JOURNAL OF FATIGUE, BUTTERWORTH SCIENTIFIC LTD, GUILDFORD, GB, vol. 29, no. 1, janvier 2007 (2007-01), pages 119-127, XP005671915 ISSN: 0142-1123
- SANDSTROEM R ET AL: "Elevated temperature low cycle fatigue of the austenitic stainless steels type 316 and 253 MA - Influence of microstructure and damage mechanisms" HIGH TEMPERATURE TECHNOLOGY, SCIENTIFIC LTD. GUILDFORD, UK, vol. 7, 1989, pages 2-10, XP009095339
- LINDE L ET AL: "Thermo-mechanical and low cycle fatigue behaviour of the austenitic stainless steel 253 MA" SWEDISCH INSTITUT FOR METAL RESEARCH, vol. IM-1999-15, avril 1999 (1999-04), pages 1-28, XP009095282

## Description

L'invention se rapporte aux aciers spéciaux et elle concerne plus particulièrement l'utilisation d'une composition d'acier, notamment dans le domaine de l'automobile.

Il existe de nombreuses compositions d'acier qui correspondent généralement à des "nuances" dont les teneurs en leurs principaux éléments constitutifs sont définies par des normes.

Les industriels sont sans cesse à la recherche de compositions d'acier pour satisfaire à des besoins spécifiques où des contraintes particulièrement sévères prédominent.

C'est dans ce contexte que la Demanderesse s'est posé le problème de rechercher des compositions d'acier, et donc des pièces pouvant être obtenues à partir de ces compositions, qui soient susceptibles de satisfaire aux nouvelles contraintes environnementales et de tenue à la fatigue à chaud rencontrées en particulier dans des applications du domaine de l'automobile.

Le problème précité se présente sous deux aspects, d'une part les contraintes en matière d'émission des gaz d'échappement, et d'autre part les contraintes liées au problème de la durée de vie et de fin de vie des véhicules automobiles, de leur déconstruction et du recyclage de leurs composants.

On rappellera à ce sujet que la Communauté Européenne a spécifié dans sa Directive 70/220/ EEC des limites imposées aux nouveaux véhicules légers (catégories M1 et N1), c'est-à-dire un niveau "d'émission standard", dont les valeurs exprimées en terme de poids rejeté au kilomètre (g/km) concernent les rejets suivants : CO, HC, HC+NOx, NOx, PM. Le terme "PM" est l'abréviation de l'expression anglo-saxonne "Particulate Material" qui signifie "matière particulaire".

Ces valeurs ont régulièrement été revues à la baisse au fur et à mesure de leur actualisation, dont les étapes dans le temps ont été ou seront :
- en juillet 1992 la norme Euro 1
- en janvier 1996 la norme Euro 2, IDI et DI
- en janvier 2000 la norme Euro 3
- en janvier 2005 la norme Euro 4
- et mi 2008 la norme Euro 5

Par ailleurs, les contraintes concernant la fin de vie des véhicules sont définies dans la Directive Européenne 2000/53/EC du 18 septembre 2000 et elles portent également sur les véhicules des segments M1 et N1. Cette Directive insiste entre autres sur l'obligation, pour les constructeurs automobiles, de rechercher et de mettre en oeuvre des solutions permettant un recyclage optimum des différents composants.

Ces différentes contraintes ont des conséquences sur les caractéristiques des véhicules et plus particulièrement sur les caractéristiques techniques des moteurs et de leurs différents composants.

Ainsi, les premières contraintes ont engagé les constructeurs automobiles dans la voie de la réduction des consommations des moteurs tout en maintenant, voire en augmentant, leur puissance de manière à atteindre des valeurs connues pour des moteurs de plus forte cylindrée selon les conceptions antérieures.

Cet objectif a pu être atteint en combinant deux facteurs, à savoir d'une part la réduction de la cylindrée des moteurs, et d'autre part l'augmentation de leur pression de fonctionnement avec pour corollaire une augmentation de la température de fonctionnement, le tout permettant d'améliorer le rendement thermique de ces nouveaux moteurs.

Une conséquence de cette élévation de température de fonctionnement est l'augmentation de la température des gaz d'échappement, laquelle est passée de 400°C environ à 700°C environ, voire au-delà.

Par ailleurs, afin de réduire sur ce type de moteur les valeurs des émissions en raison d'une part "d'imbrûlés", il a été adapté un système de recyclage des gaz d'échappement qui sont réinjectés dans le circuit d'alimentation du moteur.

Les gaz d'échappement sont ainsi réinjectés, ou remis en circulation, au moyen d'un "système de recyclage des gaz d'échappement" appelé aussi "Exhaust Gas Recycling" (terme anglo-saxon connu aussi par son abréviation EGR), ce système étant constitué de divers composants, dont des tubes en acier.

Ces systèmes de recyclage comportent des composants soumis à des contraintes particulièrement élevées. C'est le cas notamment du tube dit "tube EGR" qui amène les gaz d'échappement dans l'échangeur thermique qui sert au refroidissement des gaz d'échappement avant leur injection dans le moteur. Ce tube est en effet traversé par des gaz d'échappement dont la température peut atteindre et dépasser 700°C. L'échangeur thermique comprend un élément tubulaire appelé "refroidisseur" ("cooler" en anglais) qui est traversé par un liquide de refroidissement dont la température en fonctionnement normal est habituellement de l'ordre de 80 à 100°C.

Par ailleurs, les contraintes environnementales en matière de durée de vie des véhicules et de leurs moteurs, ainsi que les contraintes en matière de déconstruction des véhicules ont amené les constructeurs à rechercher des matériaux particulièrement résistants. Ces matériaux doivent résister à la corrosion pouvant être provoquée par les gaz et autres composants corrosifs résultant de la combustion des carburants et également par les condensats qui se forment lorsque le moteur est à l'arrêt. Ils doivent de plus avoir une bonne tenue à la fatigue à chaud en raison des contraintes mécaniques et vibratoires auxquelles sont soumis ces éléments d'environnement moteur. Mais ces matériaux doivent également posséder des caractéristiques de tenue dans le temps leur permettant, soit lors des rechanges de pièces, soit lors de la déconstruction des véhicules, de récupérer des composants usés ou défaillants pouvant être recyclés.

De plus les tubes servant à la fabrication des éléments devant être assemblés pour constituer ces équipements doivent être aptes à subir des déformations à froid et des opérations de soudage lors des étapes de production et d'assemblage des éléments en vue de constituer l'ensemble appelé EGR. Les matériaux constituant ces éléments doivent ainsi être en mesure de pouvoir subir des allongements minimum de 40% sans dommage pour leur utilisation ultérieure.

Pour ces différentes raisons, les constructeurs sont à la recherche de solutions mettant en oeuvre des métaux ou leurs alliages présentant une bonne tenue à la corrosion, présentant une bonne résistance à la fatigue à chaud et pouvant être recyclés.

En ce qui concerne la tenue (ou résistance) à la fatigue, un seuil minimum à franchir servant assez couramment de valeur significative dans le domaine de la construction mécanique, et en particulier de la construction automobile, est le nombre de 1 000 000 de cycles.

En d'autres termes, les constructeurs automobiles, lorsqu'ils caractérisent par des essais de tenue à la fatigue les performances des composants destinés à la construction des véhicules, sont fréquemment amenés à écarter les solutions techniques qui ne permettent pas d'atteindre et de franchir ce nombre minimum de cycles sous certaines conditions ou contraintes afférentes à chaque type de composants.

C'est dans ce contexte que la Demanderesse a recherché des solutions en partant de compositions d'acier connues et dont les propriétés n'avaient pas été complètement explorées.

L'art antérieur est illustré par les documents suivants.
- FR-A1-2 283 238 (AVESTA JERNVERKS AB [SE]) 26 mars 1976 (1976-03-26)
- US-A-4 224 062 (DARNFORS SVEN) 23 septembre 1980 (1980-09-23)
- http://www.worldstainless.org/NR/rdonlyres /1563541 A-23AD-4869-A5BF-D4F1 FC963257/2415 /StainlessSteelApplicationsAutomotive.pdf Extrait de l'Internet: URL:http://www.worldstainless.org/About+st ainless/What+can/Transportation/Automotive +Applications/Document+Listing.htm>
- Extrait de l'Internet: URL:www.outokumpu.com>
- ANDERSSON ET AL: "Low cycle fatigue of four stainless steels in 20% CO-80% H2" INTERNATIONAL JOURNAL OF FATIGUE, BUTTERWORTH SCIENTIFIC LTD, GUILDFORD, GB, vol. 29, no. 1, janvier 2007 (2007-01), pages 119-127, ISSN: 0142-1123
- SANDSTROEM R ET AL: "Elevated temperature low cycle fatigue of the austenitic stainless steels type 316 and 253 MA - influence of microstructure and damage mechanisms" HIGH TEMPERATURE TECHNOLOGY, SCIENTIFIC LTD. GUILDFORD, UK, vol. 7, 1989, pages 2-10,
- LINDE L ET AL: "Thermo-mechanical and low cycle fatigue behaviour of the austenitic stainless steel 253 MA" SWEDISCH INSTITUT FOR METAL RESEARCH, vol. IM-1999-15, avril 1999 (1999-04), pages 1-28,

Ces documents concernent des compositions d'acier pour usages spéciaux dans le domaine de l'automobile. Toutefois aucun de ces documents ne décrit ni ne suggère l'utilisation de telles compositions pour la fabrication d'un tube de circuit de recyclage de gaz d'échappement (circuit EGR), dans des conditions de résistance élevée à la fatigue à chaud, comme définies ci-après.

L'invention concerne plus particulièrement l'utilisation d'une composition d'acier, qui présente les teneurs suivantes où les pourcentages sont exprimés en poids:

| | |
|---|---|
| Carbone : | 0,04 à 0,20 % |
| Silicium : | 1,00 à 2,50 % |
| Chrome : | 16,0 à 25,0 % |
| Nickel : | 8,0 à 15,0 % |
| Azote : | 0,10 à 0,20 % |
| Cérium : | 0,03 à 0,08 % |

et les teneurs supplémentaires éventuelles suivantes :
Manganèse : 1,00 % au maximum
Phosphore : 0,045 % au maximum
Soufre : 0,030% au maximum
le complément étant constitué par du Fer et des impuretés éventuelles,
pour la fabrication d'un tube de circuit de recyclage de gaz d'échappement (circuit EGR), dans laquelle le tube présente une résistance élevée à la fatigue à chaud s'exprimant en nombre de cycles dépassant 1 000 000 de cycles, à des températures d'au moins 700°C, sous des contraintes de 3 00 MPa à l'état recuit et de 800 MPa à l'état écroui.

En effet, des échantillons obtenus à partir d'une composition selon l'invention ont été testés et ont permis de placer partiellement, selon les cas, des points des courbes de Wöhler à des températures de 20°C, 400°C et 700°C sous des valeurs de contraintes maximales se situant entre 250 et 700 MPa à l'état recuit et entre 600 et 1 200 MPA à l'état écroui.

Ces tracés mettent en évidence une tenue à la fatigue à chaud (700°C) d'un minimum de 1 000 000 de cycles sous contrainte maximale de 300 MPa à l'état recuit et de 800 MPa à l'état écroui. Dans le cadre de l'invention, on retient également comme valeur significative de tenue à la fatigue à chaud le chiffre de 1 000 000 de cycles, valeur assez couramment utilisée dans le domaine de la construction mécanique et en particulier de l'automobile comme seuil minimum à atteindre.

Dans la composition de l'invention, le fer est bien entendu le constituant prédominant. Cependant outre les teneurs mentionnées plus haut, la composition peut comprendre d'autres constituants mineurs, par exemple à l'état de traces, et aussi des impuretés éventuelles.

Différents essais menés sur des compositions d'acier répondant aux caractéristiques précitées ont permis de montrer que ces compositions présentaient notamment de remarquables propriétés de résistance à la fatigue à chaud dans des conditions de température supérieure ou égale à 700°C.

Ces compositions d'acier, qui sont des compositions d'acier inoxydable de type austénitique, permettent de réaliser des composants de formes spécifiques, en particulier des composants tubulaires, par différents procédés de formage connus, notamment par hydroformage. Ces compositions conviennent donc particulièrement bien à la réalisation de composants pour des systèmes EGR comme définis précédemment.

Dans un mode de réalisation préférentiel de l'invention, la composition d'acier comprend les teneurs suivantes :

| | |
|---|---|
| Carbone : | 0,04 à 0,20 % |
| Silicium : | 1,00 à 2,50 % |
| Chrome: | 18,0 à 22,0 % |
| Nickel : | 9,0 à 12,0 % |
| Azote : | 0,10 à 0,20% |
| Cérium : | 0,03 à 0,08 % |

La composition de l'invention comporte deux sous-familles proches.

Dans une première sous-famille, la composition de l'invention comprend les teneurs suivantes :

| | |
|---|---|
| Carbone : | 0,04 à 0,08 % |
| Silicium : | 1,00 à 2,00 % |
| Chrome : | 18,0 à 20,0 % |
| Nickel : | 9,0 à 11,0 % |
| Azote : | 0,12 à 0,20 % |
| Cérium : | 0,03 à 0,08 % |

Cette première sous famille inclut une nuance connue qui est caractérisée par des teneurs supplémentaires en manganèse, phosphore et soufre. Il s'agit de la nuance 1.4818 selon la norme NF EN ou encore S30415 selon la norme ASTM.

Dans une deuxième sous-famille, la composition de l'invention comprend les teneurs suivantes :

| | |
|---|---|
| Carbone : | 0,05 à 0,12 % |
| Silicium : | 1,40 à 2,50 % |
| Chrome : | 20,0 à 22,0 % |
| Nickel : | 10,0 à 12,0 % |
| Azote : | 0,12 à 0,20 % |
| Cérium : | 0,03 à 0,08 % |

Cette deuxième sous famille inclut une nuance connue qui est caractérisée par des teneurs supplémentaires en manganèse, phosphore et soufre. Il s'agit de la nuance 1.4835 selon la norme NF EN ou encore S30815 selon la norme ASTM.

Dans l'utilisation selon l'invention, le tube est un tube droit qui peut être obtenu par soudage longitudinal d'une bande de métal, ou feuillard, selon les procédés bien connus de l'homme du métier pour la fabrication de tubes soudés. Le tube peut également être obtenu par laminage, en particulier un procédé de laminage à chaud, suivi si nécessaire d'un laminage à froid, selon les caractéristiques dimensionnelles et mécaniques nécessaires à son usage ou à ses transformations ultérieures. Il est également possible de réaliser le tube par extrusion ou par étirage. Ces procédés sont également bien connus de l'homme du métier.

Sous un autre aspect, l'invention concerne un tube de circuit de recyclage (ou recirculation) de gaz d'échappement (circuit EGR) pour un moteur thermique de véhicule automobile, obtenu par transformation d'un tube tel que défini précédemment.

Pour la réalisation d'un tel tube, on part d'un élément tubulaire droit de dimensions choisies auquel l'on fait subir des opérations de transformation en général à froid. Ces opérations de transformation peuvent comprendre par exemple des étapes de formage d'ondulations circulaires (appelées également "soufflets") par hydroformage, de cintrage, d'évasement ou toute autre opération en vue d'obtenir le tube selon le plan tel que défini par son concepteur.

Le tube EGR peut être obtenu soit à l'état recuit, soit à l'état non traité thermiquement après déformation à froid, en fonction de l'application concernée. Dans le cas des circuits EGR, les tubes obtenus pourront préalablement à leur assemblage être traités thermiquement, si les conditions de leur déformation entraînent la nécessité d'effectuer un traitement thermique afin de les rendre aptes à répondre à leurs conditions ultérieures d'utilisation.

Dans la description qui suit, donnée seulement à titre d'exemple, on se réfère aux dessins annexés, sur lesquels :
- la figure 1 représente schématiquement une machine de traction/compression utilisée pour tester des éprouvettes réalisées à partir de compositions selon l'invention et à partir d'éprouvettes témoins à des fins de comparaison ;
- la figure 2 représente quatre courbes de WÔHLER obtenues à partir d'essais menés sur la machine de la figure 1 et respectivement sur des pièces réalisées dans les quatre compositions d'acier ayant des applications connues dans des secteurs tels que la sidérurgie, les cimenteries, la fabrication de pièces de fours, les essais étant conduits à la température ambiante (20°C) et sur des échantillons à l'état recuit ;
- la figure 3 représente quatre courbes de WÖHLER obtenues dans des conditions analogues à celles de la figure 2, sauf que les quatre échantillons étaient à l'état travaillé à froid ;
- la figure 4 reprend deux des courbes de la figure 2 et montre des points de mesure provenant d'essais menés à 400°C et 700°C pour deux échantillons à l'état recuit ;
- la figure 5 reprend deux des courbes de la figure 3 et montre des points de mesure provenant d'essais menés à 400°C et 700°C pour deux échantillons à l'état travaillé à froid ; et
- la figure 6 représente un composant d'un système EGR réalisé dans une composition d'acier selon l'invention.

On décrira maintenant un certain nombre d'essais qui ont été menés et ont permis de mettre en évidence les propriétés de compositions d'acier répondant à la définition mentionnée plus haut.

Le but était de tester des nuances connues dans des applications nécessitant une tenue à la fatigue à chaud mais dans des conditions moins sévères de sollicitation (contraintes, vibrations, température) ou pouvant présenter des caractéristiques susceptibles de répondre au moins partiellement aux caractéristiques recherchées.

Les essais ont porté sur cinq nuances référencées selon leur désignations mentionnées dans les normes ASTM et NF EN, et avec, pour certaines d'entre elles, l'indication de leur appellation courante. Ces références et appellations sont représentées dans le tableau 1 ci-après:

**Tableau 1**

| Appellation courante | Norme ASTM (désignation UNS) | Norme NF EN |
|---|---|---|
| 304L | S30403 | 1.4307 |
| 309S | S30908 | 1.4833 |
| 321 | S32100 | 1.4541 |
| | S30415 | 1.4818 |
| | S30815 | 1.4835 |

Les trois premières nuances ont été testées en raison d'applications connues dans des secteurs tels que la sidérurgie, les cimenteries, la fabrication de pièces de fours.

Les deux dernières nuances sont connues pour leurs caractéristiques réfractaires, et il paraissait intéressant à la demanderesse d'en connaître les caractéristiques de tenue à la fatigue.

Peu d'éléments techniques sont disponibles dans les bibliographies, publications, etc, sur la caractérisation des aciers en tenue à la fatigue à chaud.

Autant la méthode de caractérisation de la tenue à la fatigue des aciers est connue sous son intitulé "Essais de fatigue" et décrite dans les "Techniques de l'ingénieur, traité Matériaux métalliques" (référence M 4 170), autant les publications sur des essais de tenue en fatigue à chaud sont en nombre limité.

Parmi ces publications on peut citer un article paru dans "Steel Research 60 (1989) N° 8", dans lequel on remarquera que les matériaux testés ont été les suivants, comme indiqué au tableau 2 ci-après:

**Tableau 2**

| Appellation courante | Norme ASTM (désignation UNS) | Norme NF EN |
|---|---|---|
| AISI 304 | S 30400 | 1.4301 |
| AISI 409 | | 1.4512 |
| AISI 316 Ti | S 31635 | 1.4571 |

Pour aucune des nuances testées par la demanderesse, il n'existait d'éléments techniques (essais, bibliographies, publications, etc...) donnant des indications sur la tenue à la fatigue à chaud dans des conditions de contraintes (efforts) et de vibrations pour les applications envisagées, spécialement pour les circuits EGR.

Les produits testés étaient des composants tubulaires obtenus selon la gamme de fabrication suivante. La matière première est un feuillard d'une largeur de 79,7mm et d'une épaisseur de 0,4mm selon la norme EN 10 217.7.

Ces composants tubulaires ont été obtenus par les étapes de transformation indiquées ci-après :
- formage, soudage TIG et traitement thermique en ligne par induction (sur une ligne de soudage automatique (température de 950 °C par passage dans une bobine d'induction de quelques secondes au défilé à la vitesse de soudage - 2 à 15 m/mn) puis coupe à la volée pour obtenir un tube d'un diamètre de 24,8 mm et d'une épaisseur de 0,4 mm ;
- finition en ligne avec contrôle non destructif suivie par une coupe en tronçons aptes à la réalisation du composant final, suivie par un contrôle visuel ;
- hydroformage du tronçon de tube pour former des "soufflets" par expansion ;
- traitement thermique du composant hydroformé à 1100°C.

Les composants testés sont des composants bruts d'hydroformage, donc à l'état écroui, et des composants hydroformés traités thermiquement (dits également recuits).

La caractérisation est réalisée au moyen d'un essai de traction répété avec un rapport de charge R = 0,1 qui est le rapport entre la traction minimale et la traction maximale, par exemple traction minimale de + 10 daN et traction maximale de + 100daN.

Les essais de fatigue sont menés :
- à température ambiante (20°C)
- à 400°C
- à 700 °C
et sur deux états distincts :
- composants recuits après hydroformage
- composants bruts d'hydroformage.

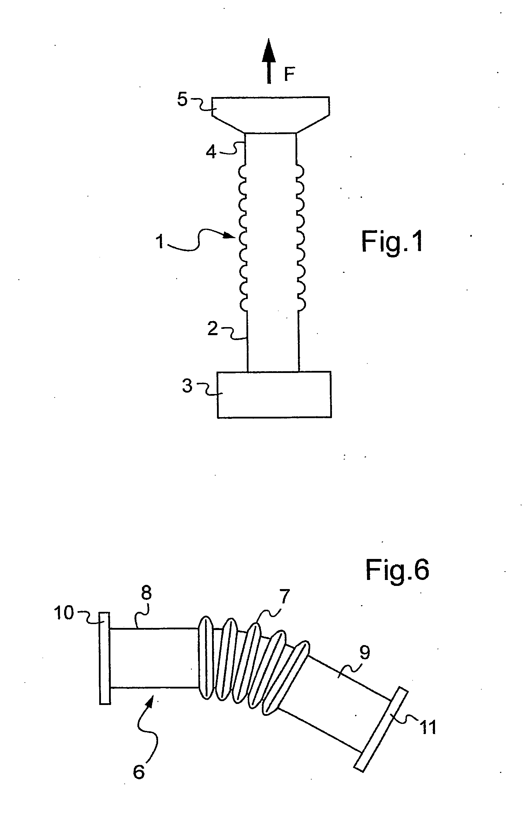

La machine utilisée est une machine de traction/compression telle que représentée schématiquement sur la figure 1 des dessins annexés. Il s'agit d'une machine de fatigue de traction/compression, la fréquence de l'essai étant de 15 Hz. L'échantillon testé est un composant tubulaire 1 comportant une partie centrale en forme de soufflet, dont une extrémité 2 est encastrée dans un capteur d'effort 3 et dont l'extrémité opposée 4 est maintenue dans un organe de prise 5 auquel est appliqué un effort comme indiqué par la flèche F.

L'objectif des essais a été de définir à chaque fois la courbe de WÔHLER pour chaque matériau, pour chaque état et pour chaque température.

On rappellera que la courbe de WÖHLER est un diagramme d'endurance obtenu à partir d'un essai de fatigue qui consiste à soumettre une éprouvette à des cycles d'efforts périodiques, d'amplitude maximale et de fréquence constante et à noter le nombre de cycles N au bout duquel la rupture se produit. On reporte ce nombre N, en général sur une échelle logarithmique, en fonction de la contrainte maximale (σ) des cycles. A chaque éprouvette correspond un point du plan (σ, N), et à partir d'un lot d'éprouvettes soumises à des contraintes maximales différentes, on obtient une courbe qui a une allure particulière.

Dans la plupart des cas, il est possible de tracer une branche asymptotique qui correspond à la limite d'endurance ou limite de fatigue.

L'utilisation de courbes de WÖHLER pour déterminer la tenue à la fatigue de certains aciers inoxydables a déjà été décrite par le professeur Erwin ROEDER dans Steel Research 60 (1989) N°8, pages 375-382, mais pour des aciers différents de ceux de l'invention.

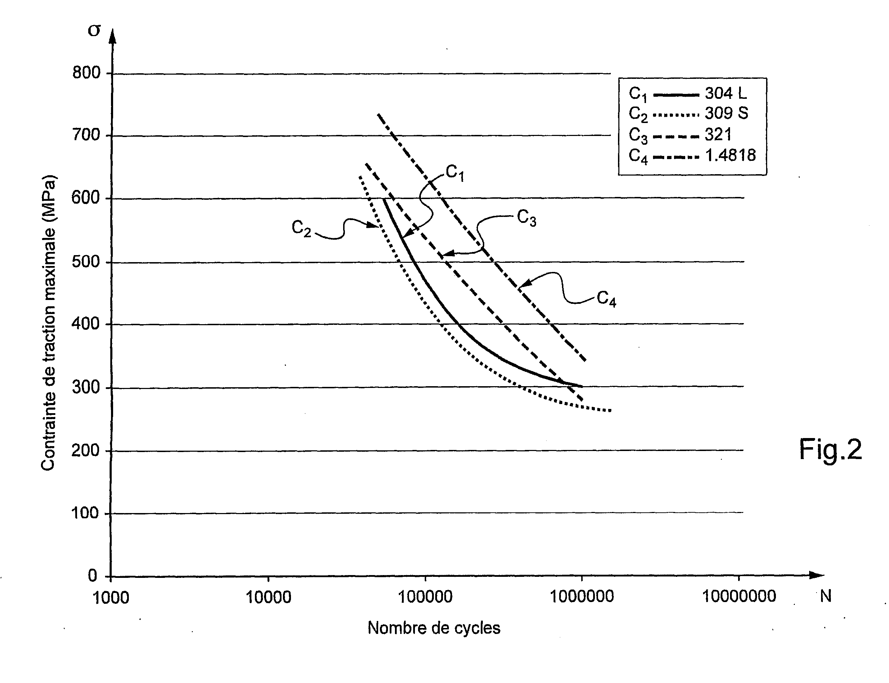

La figure 2 montre quatre courbes de WÖHLER C₁, C₂ , C₃ et C₄ obtenues pour quatre des compositions d'acier correspondant respectivement aux nuances 304L, 309S et 321 selon l'appellation courante mentionnée plus haut et 1.4818. Dans l'exemple, les tests ont été conduits à la température ambiante (20°C) et sur des échantillons à l'état recuit.

On constate que ces courbes ont chacune une forme caractéristique comme mentionné précédemment.

Les courbes de la figure 2 montrent que la composition selon la nuance 1.4818 (courbe C₄) présente des performances supérieures aux autres nuances et en particulier à la nuance 321 (courbe C₃) prise comme référence dans l'industrie automobile.

Des essais analogues ont été conduits sur les cinq matériaux mentionnés plus haut à des températures de 20°C, 400°C et 700°C, respectivement à l'état recuit (état A) et à l'état travaillé à froid, donc écroui (état CW).

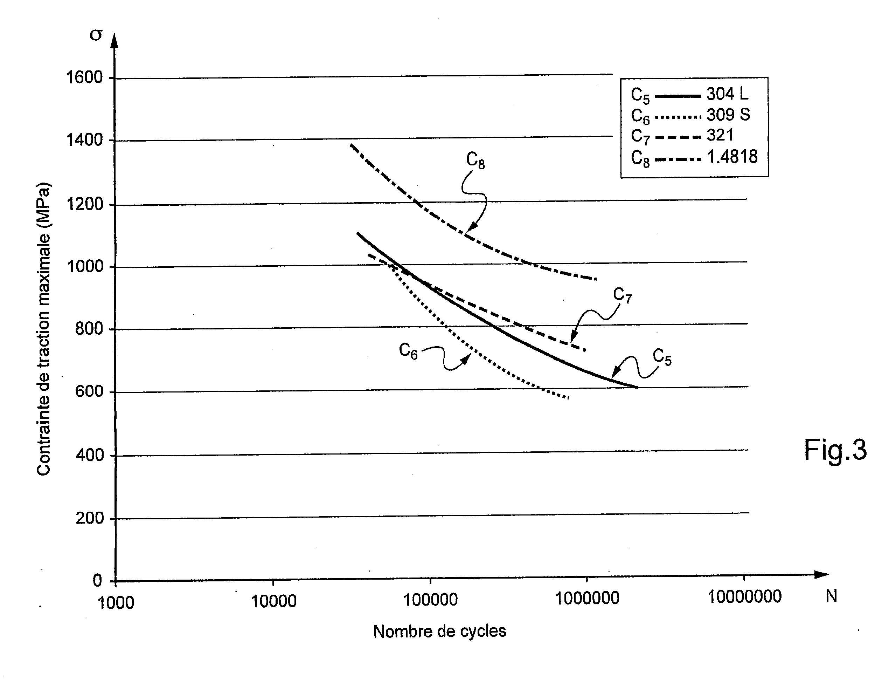

La figure 3 montre quatre courbes de WÖHLER C₅, C₆, C₇ et C₈ obtenues pour les quatre compositions d'acier de la figure 2, correspondant respectivement aux nuances 304L, 309S, 321 et 1.4818. Dans cet exemple, les tests ont été conduits à la température ambiante (20°C) et sur des échantillons à l'état travaillé à froid.

Les courbes de la figure 3 montrent, là aussi, que la composition selon la nuance 1.4818 (courbe C₈) présente des performances supérieures aux autres nuances et en particulier à la nuance 321 (courbe C7) prise comme référence.

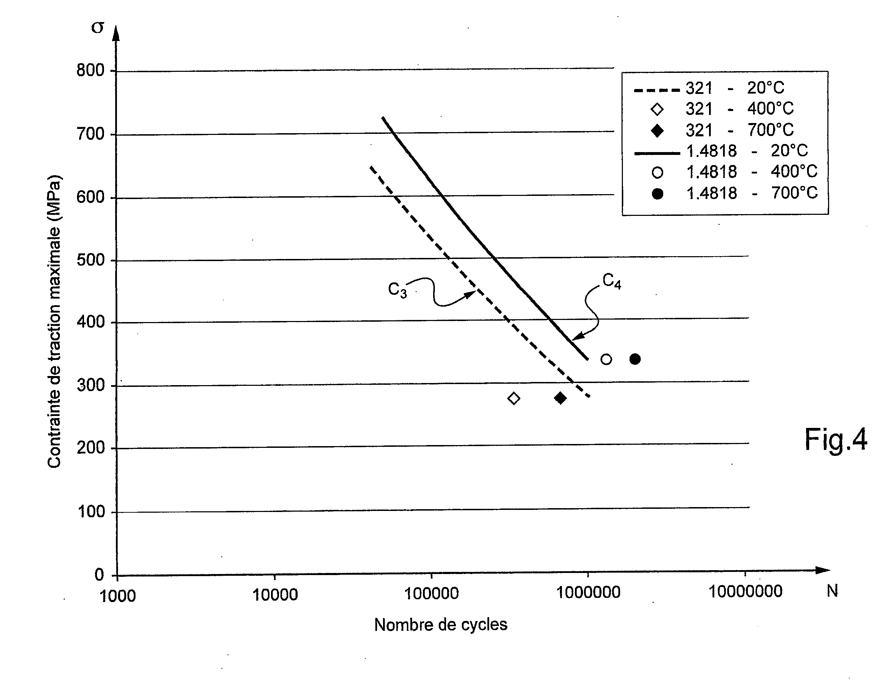

La figure 4 reprend les courbes C₃ et C₄ de la figure 2 qui correspondent respectivement aux nuances 321 et 1.4818 et résultent donc de tests conduits à la température ambiante (20°C) et sur des échantillons à l'état recuit. On a porté en outre sur la figure 4 différents points provenant de mesures effectuées sur les nuances 321 et 1.4818 à partir de tests menés à 400°C et à 700°C, toujours sur des échantillons à l'état recuit.

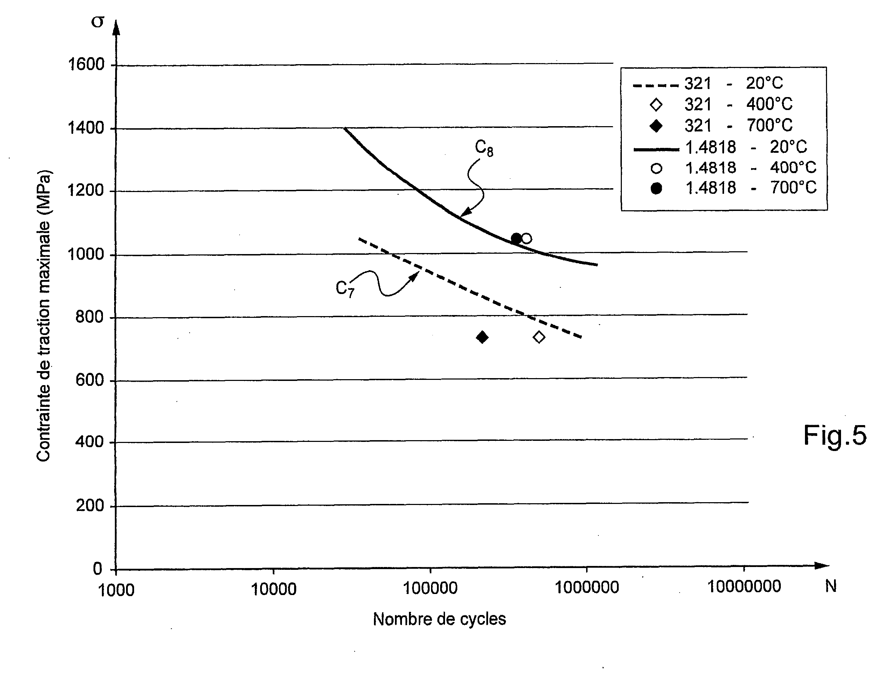

La figure 5 reprend les courbes C₇ et C₈ de la figure 3 qui correspondent respectivement aux nuances 321 et 1.4818 et résultent donc de tests conduits à la température ambiante (20°C) et sur des échantillons à l'état travaillé à froid. On a porté en outre sur la figure 5 différents points provenant de mesures effectuées sur les nuances 321 et 1.4818 à partir de tests menés à 400°C et à 700°C, toujours sur des échantillons à l'état travaillé à froid.

Les résultats des figures 4 et 5 montrent aussi les bonnes performances de la nuance 1.4818, par rapport à la nuance 321, prise comme référence, dans des tests menés à des températures élevées (400°C et 700°C), aussi bien pour des échantillons à l'état recuit, que pour des échantillons à l'état travaillé à froid.

Les résultats obtenus à partir des cinq matériaux testés mentionnés précédemment ont mis en évidence, et contre toute attente, des performances très supérieures à ce que l'on pensait pouvoir obtenir, sur deux matériaux testés, à savoir ceux correspondant aux nuances 1.4818 et 1.4835 selon la norme NF EN.

Ces résultats sont rassemblés dans les tableaux 3 et 4 ci-dessous. Le tableau 3 présente la tenue à la fatigue à chaud exprimée en nombre de cycles sous une contrainte de traction maximale de 300 MPa pour les cinq matériaux à l'état recuit (état A), respectivement à 20°C, 400°C et 700°C. Le tableau 4 est analogue au tableau 3, à la différence que la contrainte de traction maximale est de 800 MPa et que les cinq matériaux sont à l'état travaillé à froid donc écroui (état CW).

Pour faciliter la compréhension des résultats, on a retenu les seuils successifs suivants exprimés en nombre de cycles: 200 000, 500 000, 1 000 000 et 2 000 000 de cycles. L'indication portée dans les tableaux mentionne le niveau non atteint, ou atteint ou sensiblement dépassé lors des essais, les valeurs inférieures au niveau indiqué ayant elles été franchies, sauf dans le cas où la valeur minimum indiquée de 200 000 cycles n'a pas pu être atteinte.

**Tableau 3**

| Etat | Nuance selon norme NF EN | 1.4307 | 1.4833 | 1.4541 | 1.4818 | 1.4835 |
|---|---|---|---|---|---|---|
| A | 20°C | Plus de 2.000.000 | Moins de 1.000.000 | 1.000.000 | Plus de 1.000.000 | Plus de 1.000.000 |
| A | 400°C | Moins de 1.000.000 | Moins de 500.000 | Moins de 500.000 | Plus de 1.000.000 | Plus de 1.000.000 |
| A | 700°C | Moins de 500.000 | Moins de 200.000 | Moins de 500.000 | Plus de 1.000.000 | 1.000.000 |

**Tableau 4**

| Etat | Nuance selon norme NF EN | 1.4307 | 1.4833 | 1.4541 | 1.4818 | 1.4835 |
|---|---|---|---|---|---|---|
| CW | 20°C | Moins de 1.000.000 | Moins de 500.000 | Moins de 1.000.000 | Plus de 1.000.000 | 1.000.000 |
| CW | 400°C | Moins de 1.000.000 | Moins de 500.000 | Moins de 1.000.000 | Plus de 1.000.000 | 1.000.000 |
| CW | 700°C | Moins de 200.000 | Moins de 200.000 | Moins de 500.000 | Plus de 1.000.000 | Près de 1.000.000 |

De l'analyse des résultats figurant dans les tableaux 3 et 4 ci-dessus, il ressort que les nuances 1.4818 et 1.4835 offrent des performances globalement supérieures aux trois autres nuances testées, et en particulier aux températures de 400 et 700°C, puisque le seuil de 1 000 000 de cycles est atteint et même dans la plupart des cas dépassé, alors que les performances des trois autres nuances sont très sensiblement inférieures à la température de 700°C qui est la température la plus représentative des conditions en utilisation.

Les cinq matériaux précédents sont également connus pour leur tenue à la corrosion dans leurs conditions d'utilisation.

Ils sont également connus pour pouvoir supporter des opérations de déformation à froid avec des allongements minimum de 40%.

La figure 6 représente un composant, ou pièce, d'un système EGR réalisé à partir d'une composition d'acier selon l'invention. Ce composant est ici un tube EGR désigné dans son ensemble par la référence 6. Le tube 6 comprend une partie centrale 7 en forme de soufflet, dans l'exemple incurvée, comprise entre deux extrémités 8 et 9 terminée par des collerettes respectives 10 et 11. Un tel tube présente une tenue élevée à la fatigue à chaud et peut être traversé par des gaz d'échappement à des températures pouvant atteindre, voire dépasser 700°C, tout en étant soumis à des vibrations élevées. La présence du soufflet permet de compenser les variations de dilatation dues à la température.

La pièce de la figure 6 ne constitue qu'un exemple parmi d'autres de composants pouvant être réalisés à partir de tubes d'une composition selon l'invention. S'agissant d'un tube EGR, celui-ci peut non seulement servir de tube de passage pour véhiculer des gaz d'échappement, mais aussi de tube d'échange de chaleur au contact avec un fluide de refroidissement.

## Revendications

1. Utilisation d'une composition d'acier présentant les teneurs suivantes où les pourcentages sont exprimés en poids :
| | |
|---|---|
| Carbone : | 0,04 à 0,20 % |
| Silicium: | 1,00 à 2,50 % |
| Chrome : | 16,0 à 25,0 % |
| Nickel : | 8,0 à 15,0 % |
| Azote : | 0,10 à 0,20 % |
| Cérium : | 0,03 à 0,08 % |
et les teneurs supplémentaires éventuelles suivantes :
| | |
|---|---|
| Manganèse : | 1,00% au maximum |
| Phosphore : | 0,045 % au maximum |
| Soufre: | 0,030% au maximum |
le complément étant constitué par du Fer et des impuretés éventuelles,
pour la fabrication d'un tube de circuit de recyclage de gaz d'échappement (circuit EGR), dans laquelle le tube présente une résistance élevée à la fatigue à chaud s'exprimant en nombre de cycles dépassant 1 000 000 de cycles, à des températures d'au moins 700°C, sous des contraintes de 300 MPa à l'état recuit et de 800 MPa à l'état écroui.

2. Utilisation d'une composition d'acier selon la revendication 1, dans laquelle la composition présente les teneurs suivantes :
| | |
|---|---|
| Carbone : | 0,04 à 0,20 % |
| Silicium : | 1,00 à 2,50 % |
| Chrome : | 18,0 à 22,0 % |
| Nickel : | 9,0 à 12,0 % |
| Azote : | 0,10 à 0,20 % |
| Cérium : | 0,03 à 0,08 % |

3. Utilisation d'une composition d'acier selon l'une des revendications 1 et 2, dans laquelle la composition présente les teneurs suivantes :
| | |
|---|---|
| Carbone : | 0,04 à 0,08 % |
| Silicium : | 1,00 à 2,00 % |
| Chrome : | 18,0 à 20,0% |
| Nickel: | 9,0 à 11,0% |
| Azote : | 0,12 à 0,20 % |
| Cérium : | 0,03 à 0,08 % |

4. Utilisation d'une composition d'acier selon l'une des revendications 1 et 2, dans laquelle la composition présente les teneurs suivantes :
| | |
|---|---|
| Carbone: | 0,05 à 0,12 % |
| Silicium: | 1,40 à 2,50 % |
| Chrome: | 20,0 à 22,0 % |
| Nickel : | 10,0 à 12,0 % |
| Azote : | 0,12 à 0,20 % |
| Cérium: | 0,03 à 0,08 % |

5. Utilisation d'une composition d'acier selon l'une des revendications 1 à 4, dans laquelle le tube est obtenu par soudage longitudinal d'une bande de métal.

6. Utilisation d'une composition d'acier selon l'une des revendications 1 à 4, dans laquelle le tube est obtenu par laminage.

7. Utilisation d'une composition d'acier selon l'une des revendications 1 à 4, dans laquelle le tube est obtenu par extrusion.

8. Utilisation d'une composition d'acier selon l'une des revendications 1 à 4, dans laquelle le tube est obtenu par étirage.

9. Tube de circuit de recyclage de gaz d'échappement (circuit EGR) d'un moteur thermique de véhicule automobile obtenu par transformation d'un tube tel que défini dans l'une des revendications 1 à 8.

10. Tube selon la revendication 9, dans lequel la transformation comprend un hydroformage.

11. Tube selon l'une des revendications 9 et 10, **caractérisé en ce qu'**il est obtenu à l'état formé à froid.

## Claims

1. Use of a steel composition having the following contents, wherein the percentages are expressed by weight:
| | |
|---|---|
| carbon: | 0.04 to 0.20% |
| silicon: | 1.00 to 2.50% |
| chromium: | 16.0 to 25.0% |
| nickel: | 8.0 to 15.0% |
| nitrogen: | 0.10 to 0.20% |
| cerium: | 0.03 to 0.08% |
and the following optional supplementary contents:
| | |
|---|---|
| manganese: | at most 1.00% |
| phosphorus: | at most 0.045% |
| sulphur: | at most 0.030%, |
the remainder being made up of iron and any impurities,
for the manufacture of an exhaust gas recycling circuit (EGR circuit) tube, wherein the tube has a high hot fatigue strength expressed as the number of cycles exceeding 1,000,000 cycles, at temperatures of at least 700°C, under stresses of 300 MPa in the annealed state and 800 MPa in the work-hardened state.

2. Use of a steel composition according to claim 1, wherein the composition has the following contents:
| | |
|---|---|
| carbon: | 0.04 to 0.20% |
| silicon: | 1.00 to 2.50% |
| chromium: | 18.0 to 22.0% |
| nickel: | 9.0 to 12.0% |
| nitrogen: | 0.10 to 0.20% |
| cerium: | 0.03 to 0.08%. |

3. Use of a steel composition according to one of claims 1 and 2, wherein the composition has the following contents:
| | |
|---|---|
| carbon: | 0.04 to 0.08% |
| silicon: | 1.00 to 2.00% |
| chromium: | 18.0 to 20.0% |
| nickel: | 9.0 to 11.0% |
| nitrogen: | 0.12 to 0.20% |
| cerium: | 0.03 to 0.08%. |

4. Use of a steel composition according to one of claims 1 and 2, wherein the composition has the following contents:
| | |
|---|---|
| carbon: | 0.05 to 0.12% |
| silicon: | 1.40 to 2.50% |
| chromium: | 20.0 to 22.0% |
| nickel: | 10.0 to 12.0% |
| nitrogen: | 0.12 to 0.20% |
| cerium: | 0.03 to 0.08%. |

5. Use of a steel composition according to one of claims 1 to 4, wherein the tube is obtained by longitudinal welding of a metal strip.

6. Use of a steel composition according to one of claims 1 to 4, wherein the tube is obtained by rolling.

7. Use of a steel composition according to one of claims 1 to 4, wherein the tube is obtained by extrusion.

8. Use of a steel composition according to one of claims 1 to 4, wherein the tube is obtained by drawing.

9. Tube of an exhaust gas recycling circuit (EGR circuit) of a heat engine of a motor car, obtained by transformation of a tube as defined in one of claims 1 to 8.

10. Tube according to claim 9, wherein the transformation comprises hydroforming.

11. Tube according to one of claims 9 and 10, **characterised in that** it is obtained in the cold-formed state.

## Patentansprüche

1. Verwendung einer Stahlzusammensetzung mit folgenden Gehalten in Gewichtsprozent:
| | |
|---|---|
| Kohlenstoff: | 0,04 bis 0,20 % |
| Silicium: | 1,00 bis 2,50 % |
| Chrom: | 16,0 bis 25,0 % |
| Nickel: | 8,0 bis 15,0 % |
| Stickstoff: | 0,10 bis 0,20 % |
| Cer: | 0,03 bis 0,08 % |
und gegebenenfalls zusätzlichen Gehalten an:
| | |
|---|---|
| Mangan: | maximal 1,00 % |
| Phosphor: | maximal 0,045 % |
| Schwefel: | maximal 0,030 %, |
Rest Eisen und mögliche Verunreinigungen,
für die Herstellung eines Rohrs eines Auspuffgas-Rückführkreises (EGR-Kreis), in dem das Rohr eine thermische Ermüdungsbeständigkeit aufweist, der durch die Anzahl von Zyklen ausgedrückt wird, wobei die Anzahl der Zyklen 1000 000 Zyklen überschreitet, bei Temperaturen von mindestens 700 °C, unter Beanspruchungen von 300 MPa im geglühten Zustand und von 800 MPa im kaltgeschmiedeten Zustand.

2. Verwendung einer Stahlzusammensetzung nach Anspruch 1, bei der die Zusammensetzung folgende Gehalte aufweist:
| | |
|---|---|
| Kohlenstoff: | 0,04 bis 0,20 % |
| Silicium: | 1,00 bis 2,50 % |
| Chrom: | 18,0 bis 22,0 % |
| Nickel: | 9,0 bis 12,0 % |
| Stickstoff: | 0,10 bis 0,20 % |
| Cer: | 0,03 bis 0,08 %. |

3. Verwendung einer Stahlzusammensetzung nach einem der Ansprüche 1 oder 2, bei der die Zusammensetzung folgende Gehalte aufweist:
| | |
|---|---|
| Kohlenstoff: | 0,04 bis 0,08 % |
| Silicium: | 1,00 bis 2,00 % |
| Chrom: | 18,0 bis 20,0 % |
| Nickel: | 9,0 bis 11,0 % |
| Stickstoff: | 0,12 bis 0,20 % |
| Cer: | 0,03 bis 0,08 %. |

4. Verwendung einer Stahlzusammensetzung nach einem der Ansprüche 1 oder 2, bei der die Zusammensetzung folgende Gehalte aufweist:
| | |
|---|---|
| Kohlenstoff: | 0,05 bis 0,12 % |
| Silicium: | 1,40 bis 2,50 % |
| Chrom: | 20,0 bis 22,0 % |
| Nickel: | 10,0 bis 12,0 % |
| Stickstoff: | 0,12 bis 0,20 % |
| Cer: | 0,03 bis 0,08 % |

5. Verwendung einer Stahlzusammensetzung nach einem der Ansprüche 1 bis 4, bei der das Rohr erhalten wird durch Längsverschweißen eines Metallbandes.

6. Verwendung einer Stahlzusammensetzung nach einem der Ansprüche 1 bis 4, bei der das Rohr durch Walzen erhalten wird.

7. Verwendung einer Stahlzusammensetzung nach einem der Ansprüche 1 bis 4, bei der das Rohr durch Extrusion erhalten wird.

8. Verwendung einer Stahlzusammensetzung nach einem der Ansprüche 1 bis 4, bei der das Rohr durch Ziehen erhalten wird.

9. Rohr eines Auspuffgas-Rückführungskreises (EGR-Kreis) eines Verbrennungsmotors eines Kraftfahrzeugs, erhalten durch Verformung eines Rohrs wie in einem der Ansprüche 1 bis 8 definiert.

10. Rohr nach Anspruch 9, bei der die Verformung eine Hydroverformung umfasst.

11. Rohr nach einem der Ansprüche 9 oder 10, **dadurch gekennzeichnet, dass** es durch Kaltverformung erhalten ist.
